# EUROPEAN PATENT APPLICATION

(11) **EP 4 786 922 A1**
(43) Date of publication of application: **05.08.2026**
(21) Application number: 24870873.7
(22) Date of filing: 26.09.2024
(51) Int. Cl.: G01C 21/00, G01C 21/20, G01C 21/36, G01C 21/34, G05D 1/43

(54) **INDOOR NAVIGATION MAP DRAWING**

(30) Priority: 27.09.2023 CN 202311268925
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: LV, Junjie, Ningbo, Zhejiang 315899 (CN)
(74) Representative: Michalski Hüttermann & Partner mbB
(86) International application number: PCT/CN2024/121426
(87) International publication number: WO 2025/067333

(57) **Abstract**

Provided in the present disclosure are a method of generating an indoor navigation map, an electronic device, and a storage medium. The method is applied to a user terminal, and includes: during a process in which the user terminal travels along one or more routes with a user, collecting, by a sensor equipped in the user terminal, route information of each of the routes; and generating the navigation map based on the route information of each of the routes; or sending the route information of each of the routes to a server for the server to generate the navigation map.

## Description

### TECHNICAL FIELD

The present disclosure relates to the field of map drawing, and in particular to a method of generating an indoor navigation map, an electronic device, and a storage medium.

### BACKGROUND

Indoor navigation refers to a system or technology that provides navigation services inside a building, which can help people accurately locate and find destinations in complex indoor environments. The indoor navigation is usually used in places such as large shopping malls, hospitals, and underground parking garages.

However, indoor environments are usually much more complex than outdoor environments, and relevant technologies have relatively low levels of informatization and digitization at present. As a result, distances typically need to be measured manually and then maps need to be drawn by hand through mapping software. Drawing an accurate indoor navigation map requires a large amount of human and material resources, resulting in high costs for drawing the indoor map while failing to ensure mapping efficiency.

### SUMMARY

In view of this, the present disclosure provides a method of generating an indoor navigation map, an electronic device, and a storage medium, so as to solve the defects in the related art. The technical solutions of the present disclosure are as follows.

According to an embodiment of the present disclosure in a first aspect, there is provided a method of generating an indoor navigation map, applied to a user terminal, the method including:
during a process in which the user terminal travels along one or more routes with a user, collecting, by a sensor equipped in the user terminal, route information of each of the routes; and
generating the navigation map based on the route information of each of the routes; or
sending the route information of each of the routes to a server for the server to generate the navigation map.

Optionally, during the process in which the user terminal travels along the one or more routes with the user, collecting, by the sensor equipped in the user terminal, the route information of each of the routes, includes:
in a case where the one or more routes include a first route from a first starting location to a designated destination and a second route from a second starting location to the designated destination, and the first route and the second route share a common point,
after collecting route information of the first route and returning to the common point, collecting, by the sensor, route information from the common point to the second starting location; and
obtaining route information of the second route by processing the route information from the common point to the second starting location in combination with the route information of the first route.

Optionally, the method further includes:
acquiring intersection description information for an intersection added by the user, where the intersection description information includes an intersection type of the intersection; and
generating navigation guidance information indicating a correct direction at the intersection based on the navigation map and the intersection description information, the correct direction being indicative of a direction conforming to a travel route in the navigation map; or
sending the intersection description information to the server for the server to generate the navigation guidance information indicating the correct direction, and receiving the navigation guidance information returned by the server;
where the navigation guidance information is for configuring a beacon installed in the correct direction.

Optionally, the method further includes:
generating a beacon installation location for the beacon based on the navigation map and the intersection description information;
during a process in which the navigation guidance information is written into the beacon and the user travels again along the one or more routes, detecting a current position of the user; and
sending a beacon installation reminder corresponding to the beacon when the current position of the user matches the beacon installation location.

Optionally, the method further includes:
generating error correction information for an incorrect direction at the intersection based on the navigation map and the intersection description information, the incorrect direction being indicative of a direction not conforming to the travel route in the navigation map; or
sending the intersection description information to the server for the server to generate the error correction information for the incorrect direction, and receiving the error correction information returned by the server;
where the error correction information is for configuring an error correction beacon installed in the incorrect direction.

According to an embodiment of the present disclosure in a second aspect, there is provided a method of generating an indoor navigation map, applied to a server, the method including:
acquiring, from a user terminal, route information required for generating the navigation map; and
generating the navigation map based on the route information.

Optionally, the method further includes:
acquiring, from the user terminal, intersection description information for an intersection, the intersection description information being added by a user and including an intersection type of the intersection;
generating navigation guidance information indicating a correct direction at the intersection based on the navigation map and the intersection description information, the correct direction being indicative of a direction conforming to a travel route in the navigation map; and
sending the navigation guidance information to the user terminal;
where the navigation guidance information is for configuring a beacon installed in the correct direction.

Optionally, the method further includes:
generating a beacon installation location for the beacon based on the navigation map and the intersection description information;
acquiring a current position of the user after sending the navigation guidance information to the user terminal; and
sending, to the user terminal, a beacon installation reminder corresponding to the beacon when the current position of the user matches the beacon installation location.

According to an embodiment of the present disclosure in a third aspect, there is provided an electronic device, including at least one memory, at least one processor, and a computer program stored on the at least one memory and executable on the at least one processor, where the at least one processor, when executing the computer program, implements the method according to the first aspect or the second aspect.

According to an embodiment of the present disclosure in a fourth aspect, there is provided a computer-readable storage medium, having a computer program stored thereon, where the computer program, when executed by at least one processor, implements steps of the method according to the first aspect or the second aspect.

In the technical solution provided in the present disclosure, the user can select the route from the starting location to the designated destination, and during the process in which the user travels along the route, information of the route may be accurately collected by using the sensor equipped in the user terminal, so that the navigation map can be accurately and quickly generated based on the collected information. By applying the technical solution of the present disclosure, generation of an indoor map is effectively simplified, enabling convenient and rapid generation of the indoor map, saving resources and costs while improving mapping efficiency.

It should be understood that the foregoing general description and the following detailed description are merely exemplary and explanatory, and cannot limit the embodiments of the present disclosure.

### BRIEF DESCRIPTION OF DRAWINGS

To describe the technical solutions in embodiments of the present disclosure or in the prior art more clearly, the accompanying drawings required for describing the embodiments or the prior art will be briefly described below. It is apparent that the drawings described below are merely some embodiments recited in the embodiments of the present disclosure, and that other drawings can be obtained from these drawings by those of ordinary skill in the art.
FIG. 1 illustrates a flowchart of a method of generating an indoor navigation map according to an exemplary embodiment of the present disclosure.
FIG. 2 illustrates a schematic diagram of a route according to an exemplary embodiment of the present disclosure.
FIG. 3 illustrates a schematic diagram of a route according to an exemplary embodiment of the present disclosure.
FIG. 4 illustrates a schematic diagram of an interface of a user terminal according to an exemplary embodiment of the present disclosure.
FIG. 5 illustrates a schematic diagram of a route according to an exemplary embodiment of the present disclosure.
FIG. 6 illustrates a sequence diagram of beacon configuration and interaction according to an exemplary embodiment of the present disclosure.
FIG. 7 illustrates a schematic diagram of an apparatus for generating an indoor navigation map according to an exemplary embodiment of the present disclosure.
FIG. 8 illustrates a schematic diagram of an apparatus for generating an indoor navigation map according to an exemplary embodiment of the present disclosure.
FIG. 9 illustrates a schematic structural diagram of an electronic device according to an exemplary embodiment of the present disclosure.

### DETAILED DESCRIPTION

Reference will now be made in detail to exemplary embodiments, examples of which are illustrated in the accompanying drawings. When the following description refers to the drawings, the same reference numerals in different drawings indicate the same or similar elements, unless otherwise specified. Implementations set forth in the following exemplary embodiments do not represent all implementations consistent with one or more embodiments of the present disclosure. Instead, they are merely examples of apparatuses and methods consistent with some aspects of one or more embodiments of the present disclosure as detailed in the appended claims.

It should be noted that in other embodiments, steps of a corresponding method are not necessarily performed in a sequence shown and described in the present disclosure. In some other embodiments, the method may include more or fewer steps than those described in the present disclosure. In addition, a single step described in the present disclosure may be decomposed into a plurality of steps for description in other embodiments; and a plurality of steps described in the present disclosure may also be combined into a single step for description in other embodiments.

Indoor navigation refers to a navigation system or technology designed for use inside a building to help people accurately locate and find destinations in complex indoor environments. The indoor navigation is mainly applied in large shopping malls, hospitals, underground parking garages, and other places requiring positioning and navigation services. The indoor navigation system can provide accurate location information and detailed navigation guidance for users, by using a series of advanced technologies and devices, such as Wi-Fi positioning, Bluetooth beacons, indoor maps, and navigation software.

However, an indoor environment is usually much more complex than an outdoor environment, for example, the indoor environment includes a large quantity of rooms, different areas, different floors, and the like. However, indoor navigation technologies have relatively low levels of informatization and digitization at present. The traditional indoor map drawing process may require manual measurement of various parameters and features of buildings and roads, followed by manually entering these data into mapping software or manually drawing maps in the mapping software based on these data, so that the entire process is time-consuming, has a large error, and is costly. In addition, since an internal structure of a building may change, such as an update of a building structure, or expansion of an overall space, in order to ensure accuracy and practicability of an indoor navigation map, it is also necessary to periodically update and maintain map data. In this case, drawing an accurate indoor navigation map requires a large amount of human and material resources, resulting in high costs for drawing the indoor map while failing to ensure mapping efficiency.

To resolve the foregoing problems, the present disclosure provides a method of generating an indoor navigation map, an electronic device, and a storage medium. A user can select a route from an starting location to a designated destination, and during a process in which the user travels along the route, information of the route can be accurately collected by using a sensor equipped in a user terminal, so that the navigation map can be accurately and quickly generated based on the collected information. By applying the technical solution of the present disclosure, generation of an indoor map is effectively simplified, enabling convenient and rapid generation of the indoor map, saving resources and costs while improving the mapping efficiency.

In an exemplary embodiment, the method may be applied to a user terminal. The user terminal may include any type of device, such as a mobile phone, a tablet device, a laptop computer, a personal digital assistant (PDA), a wearable device (such as a smart glass or a smart watch), a vehicle-mounted device, or an in-vehicle infotainment system, which is not limited by the present disclosure. During operation, the user terminal may complete generation of an indoor map through human-computer interaction with a user. It should be noted that an application for generating (e.g., drawing) a map may be pre-installed on an electronic device used by a user as a user terminal, so that the application may be started and run on the user terminal. Alternatively, when an online "client" such as HTML5 technology is used, a corresponding application may be obtained and run without installing the application on the electronic device.

In an exemplary embodiment, the method may also be applied to a server. The server may be a physical server including a standalone host, or the server may be a virtual server hosted on a cluster of hosts. During operation, the server may run a program of the method of generating the indoor navigation map on a server side, to implement the method of generating the indoor navigation map. In the technical solutions of one or more embodiments of the present disclosure, the server may cooperate with an application software running on the user terminal, to enable generation of the indoor navigation map.

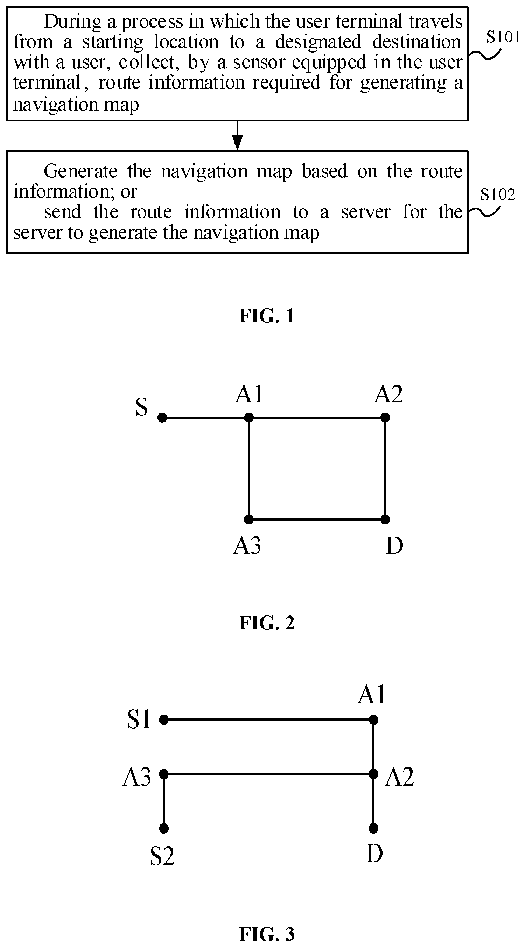

FIG. 1 illustrates a flowchart of a method of generating an indoor navigation map according to an exemplary embodiment of the present disclosure, including steps S101 and S102.

At S101, during a process in which the user terminal travels from a starting location to a designated destination with a user, route information required for generating the navigation map is collected by a sensor equipped in the user terminal.

At S102, the navigation map is generated based on the route information, or the route information is sent to a server for the server to generate the navigation map.

In an exemplary embodiment, the user may include an individual with a mapping requirement, such as a personnel responsible for map generation, or an ordinary user who wants to plan a specific navigation route, which is not limited by the present disclosure.

In an exemplary embodiment, the user may plan a route from the starting location to the designated destination himself/herself, and the route may be planned according to a requirement of the user, for example, the route may be a route with a shortest distance, a route with fewest turns, or the like. When the user travels along the route, the user terminal may collect route information of the route by using a sensor equipped in the user terminal. The route information herein is information required for generating the navigation map, and may include turning information, uphill and downhill information, and the like. The sensor herein may include a variety of sensors, for example, a gyroscope, an accelerometer, a magnetometer, and the like. Corresponding data may be collected by using a single sensor, or a plurality of sensors may be equipped simultaneously, in which case data from the plurality of sensors may be fused to obtain more accurate and comprehensive data. For example, by using a gyroscope in cooperation with an accelerometer, changes in distance, direction, and height may be simultaneously measured to further convert the changes into the route information required for generating the navigation map.

In an exemplary embodiment, an application software capable of implementing the method of the present disclosure may be installed on a mobile phone in advance. The user then holds the mobile phone while walking from the starting location to the designated destination. During this process, the gyroscope and the accelerometer that are equipped in the mobile phone can detect a posture of the user, count steps of the user, and further calculate a travel distance of the user. Additionally, a turning status of the user may be acquired by using the gyroscope, and a change in an altitude of the user may be acquired by using the accelerometer, to finally obtain the route information that can be used to generate the navigation map. In another exemplary embodiment, an application software capable of implementing the method of the present disclosure may be installed on an in-vehicle infotainment system (head unit) of a vehicle in advance, and the user drives the vehicle from the starting location to the designated destination. During this process, the head unit may obtain a travel distance of the vehicle by using a wheel speed sensor equipped on the vehicle, and obtain a steering status of the vehicle by using a steering angle sensor, to further obtain the route information. It can be understood that, in addition to the two specific embodiments listed, there are other methods to collect the route information by using sensors, and those skilled in the art can make selections according to requirements, which is not limited by the present disclosure. With the above steps, the information required for generating the navigation map can be collected quickly and conveniently, which simplifies operational procedures and improves the information collection efficiency.

It should be noted that the solution of the present disclosure also supports manual input of the route information by the user, for example, by providing an open interface to enable the user to input information such as steps, a travel distance, turning, and uphill/downhill, or by providing an open interface to enable the user to modify and adjust data collected by the sensor. With the technical solution of the present disclosure, specific route information can be adjusted more flexibly, facilitating correction of erroneous data.

In an exemplary embodiment, the user terminal may generate the navigation map according to the collected route information. Referring to FIG. 2, there are two routes from the starting location S to the designated destination D, where a first route is S → A1→ A2→ D, and a second route is S → A1→ A3→ D. If the user selects the first route, during a process in which the user travels along the first route, information collected by the sensor of the user terminal at least includes: a travel distance of the user (S → A2), a right turn of the user (a right turn at A2), and a travel distance of the user (A2→ D). According to these information, the user terminal can draw a navigation route from the starting location S to the designated destination D. Here, while the user terminal collects the route information, a part of the map generated according to the currently collected route information may be displayed to the user through a display module equipped, so that the user can obtain a currently drawn route.

In another exemplary embodiment, the user terminal may also send the collected route information to the server, and the server generates the navigation map based on the received route information. The map generated by the server may be returned to the user terminal for display to the user by the user terminal. Here, the server may return a part of the map generated to the user terminal without intentional delay, so that the user terminal can display a currently drawn route in real time.

It can be understood that, the server usually has better hardware configuration and higher computational performance than the user terminal, so the efficiency of generating the navigation map by the server can be higher. However, when the server is under heavy load, the user terminal can be used to generate the navigation map to alleviate some of the load on the server. Additionally, when network connectivity is poor, the user terminal can generate the navigation map by itself to ensure smooth generation of the map.

By applying the technical solution of the present disclosure, generation of an indoor map is effectively simplified, enabling convenient and rapid generation of the indoor map, saving resources and costs while improving the mapping efficiency.

In an exemplary embodiment, there may be a plurality of routes to the designated destination, for example, a large shopping mall may have a plurality of entrances, or an underground parking garage may have a plurality of entrances, etc., where there may be a common point between the plurality of routes. Here, the common point between the plurality of routes may be the designated destination, or may be an intersection point between the plurality of routes other than the designated destination. When such an intersection point exists, the intersection point is preferentially used as the common point. Meanwhile, a route from a first starting location to the designated destination may be taken as a first route, and a route from a second starting location to the designated destination may be taken as a second route.

In an exemplary embodiment, after the user terminal completes the collection of route information of the first route, the user may return to the common point, start from the common point, and travel to the second starting location. During the process in which the user travels from the common point to the second starting location, the user terminal may continue to collect route information through the equipped sensor, and generate route information of the second route based on the route information, that is, generate route information from the second starting location to the designated destination. Thereafter, the user terminal or the server may generate a navigation map for the second route according to the route information of the second route.

It should be noted that the number of starting locations is not limited to two, and the number of routes that can be passed is not limited to two. In a case where there are more starting locations and more routes that can be passed, the user can find the common point multiple times and then perform subsequent steps of the method.

Specifically, referring to FIG. 3, there are two starting locations S1 and S2 in FIG. 3, and there are two routes from the starting locations to the designated destination D, in which a first route is S1→ A1→ A2→ D; and a second route is S2→ A3→ A2→ D, where A2 is the common point between the two routes. After completing the collection of route information of the first route, the user arrives at the designated destination D from S1, at this time, the user may return to the common point A2, travel from A2 to A3, and then to S2. During this process, the route information collected by the sensor at least includes: a travel distance of the user (A2→ A3), a left turn of the user (a left turn at A3), and a travel distance of the user (A3→ S2). Since the user arrives at another starting location from the common point, which is equivalent to traveling in a "reverse" direction, it is necessary to process part of these route information. For example, a direction may be reversed, such as reversing a left turn to a right turn. For example, an uphill/downhill may be reversed, such as reversing an uphill to a downhill. The route information after processed at least includes: a travel distance of the user (S2→ A3), a right turn of the user (a right turn at A3), and a travel distance of the user (A3→ A2). In this case, in combination with the collected route information of A2→D, the route information of the second route may be obtained, so that the user terminal or the server can generate the navigation map for the second route based on the route information of the second route.

By applying the technical solution of the present disclosure, collection of redundant route information by the sensor is avoided. Furthermore, when there are a plurality of travel routes, the user does not need to complete each of the routes, thereby reducing the travel distance of the user and improving the mapping efficiency.

In an exemplary embodiment, a beacon for navigation guidance may be installed in the travel route to facilitate subsequent use of the route by an actual user (e.g., a guest entering a shopping mall, a vehicle entering an underground parking garage).

In an exemplary embodiment, the user may add intersection description information through the user terminal during the traveling process. The user terminal may generate navigation guidance information indicating a correct direction at an intersection, based on the generated navigation map and the intersection description information. Alternatively, the user terminal may send the obtained intersection description information to the server, and the server generates the navigation guidance information indicating the correct direction at the intersection, and returns the navigation guidance information to the user terminal. Thereafter, the user terminal may configure the beacon based on the navigation guidance information, so that the beacon can subsequently provide navigation guidance to the actual user.

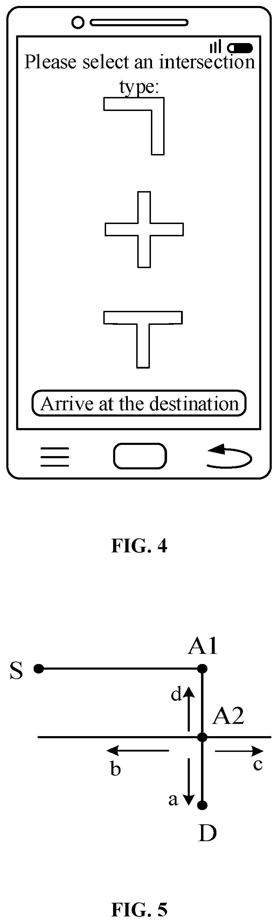

Specifically, the intersection description information includes an intersection type for representing an intersection mode between roads at the intersection, and common intersection types include crossroads, L-shaped intersections, T-shaped intersections, and the like. The user may input the intersection type through an interactive interface provided by the user terminal. For example, as shown in FIG. 4, the user may select a corresponding intersection type by clicking on the interface of the application. Alternatively, the user may input the intersection type by means of voice or text, or an image may be provided for the user terminal to perform image recognition and obtain the intersection type. Meanwhile, a direction conforming to the travel route planned by the user may be taken as the correct direction at the intersection, and the navigation guidance information may be generated accordingly. Referring to FIG. 5, if the travel route planned by the user is S → A1→ A2→ D, for the intersection A2, a direction a is the correct direction at the intersection A2. In subsequent use, if the actual user travels from A1 to A2, the navigation guidance information at this time may include a prompt to go straight, for example, "Go straight ahead for 50 meters", to guide the actual user to continue traveling in the direction a and finally arrive at the designated destination D.

Specifically, the beacon may include a Bluetooth beacon, which may send a Bluetooth signal within a short range for detection and positioning by other devices. The navigation guidance information is configured to guide the actual user to travel, for example, to prompt the user about a travel direction, a travel distance, or an operation that needs to be performed at the next intersection. After the beacon is configured based on the navigation guidance information, the beacon may transmit the information at a fixed broadcast interval. The actual user may scan a Bluetooth beacon in a surrounding environment by using an electronic device thereof, receive the broadcast signal, and obtain the navigation guidance information in the broadcast signal, to obtain a navigation guidance. Here, after the electronic device of the actual user obtains the navigation guidance information, the navigation guidance information may also be converted into various forms and then provided to the actual user, for example, a navigation reminder may be broadcast by voice, a text or prompt icon may be displayed through a display interface of the electronic device, etc., which is not limited by the present disclosure.

Specifically, the navigation guidance information indicating the correct direction at the intersection obtained by the user terminal may include navigation guidance information of a plurality of intersections, for example, navigation guidance information of all intersections in the entire route. After obtaining the navigation guidance information, the user terminal may complete configuration of all beacons to be configured in a single operation. For example, if a route passes through ten intersections from a starting location to a designated destination, and ten beacons need to be configured, the user terminal may respectively write ten pieces of navigation guidance information into ten Bluetooth beacons in a single operation. It can be understood that those skilled in the art may select the method of configuring the beacons according to actual needs, for example, whether to configure the beacons in batch in a single operation, how many beacons to be configured in batch in a single operation, and which beacons of particular locations to be configured upon subsequently obtaining beacon installation locations. Those skilled in the art may also select to manually input parameters of the beacons, or manually adjust the parameters that have been written into the beacons, etc., which is not limited by the present disclosure.

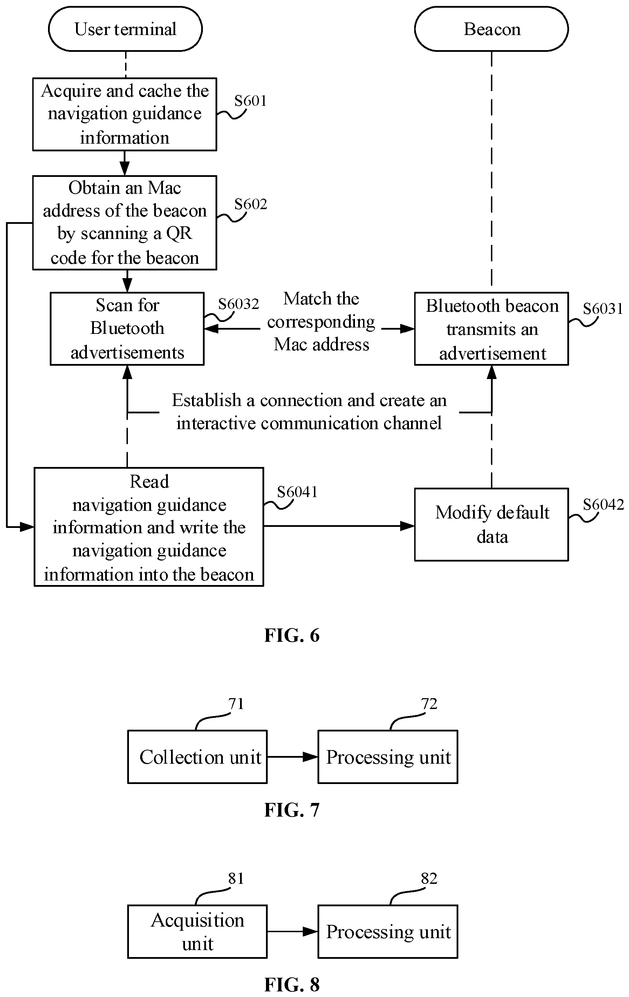

Referring to FIG. 6, in an exemplary embodiment, the user terminal performs step S601 to acquire and cache all the navigation guidance information. The user terminal performs step S602 to obtain a hardware Mac address of the beacon to be configured by scanning a code. Subsequently, the beacon performs step S6031 to transmit a Bluetooth advertisement, and at the same time, the user terminal performs step S6032 to start scanning for nearby Bluetooth advertisements. When an advertisement contains information consistent with the scanned Mac address, the user terminal establishes a connection channel with the corresponding Bluetooth beacon. After the connection is successful, the user terminal performs step S6041 to read a piece of navigation guidance information cached and write this piece of navigation guidance information into a storage area of the corresponding Bluetooth beacon. At the same time, the Bluetooth beacon performs step S6042 to modify its own default data, thereby completing configuration of the Bluetooth beacon. Here, the Bluetooth beacon may be numbered and recorded, so that the Bluetooth beacon may be subsequently installed at the corresponding intersection to provide correct navigation guidance. It may be understood that the navigation guidance information herein may be generated by the user terminal, or may be generated by the server and sent to the user terminal for the user terminal to configure the beacon.

By applying the technical solution of the present disclosure, the user terminal can complete the configuration of the Bluetooth beacon in a single operation, and the user does not need to manually change data of the Bluetooth beacon through an additional configuration tool, which greatly simplifies the configuration operation of the beacon and improves the configuration efficiency of the beacon.

In an exemplary embodiment, an installation location of the beacon, i.e., the beacon installation location may be generated based on the navigation map and the intersection description information. During a process in which the navigation guidance information is written into the beacon and the user travels again from the starting location to the designated destination, a current position of the user is detected; and a beacon installation reminder corresponding to the beacon is sent when the current position of the user matches the beacon installation location.

In an exemplary embodiment, in the solution of the present disclosure, after the user arrives at the destination from the starting location for the first time, at least the navigation map, the navigation guidance information, and the beacon installation location may be obtained. Then, during the process in which the user travels again from the starting location to the designated destination, that is, during the process in which the user travels along the travel route for the second time, it may be detected whether the position of the user can match the installation location of each beacon, that is, it may be detected whether the position of the user falls within an area range of the installation location of the beacon. If the current position of the user can match the beacon installation location, a beacon installation reminder corresponding to the beacon is sent to remind the user to install the corresponding beacon herein. It should be noted that the beacon installation location may be a position within a preset area in the correct direction at the intersection. Specific shape and size of the preset area may be adjusted by those skilled in the art according to actual needs, which is not limited by the present disclosure.

In an exemplary embodiment, the beacon installation location may also be generated by the server based on the navigation map and the intersection description information sent by the user terminal. After the server sends the navigation guidance information to the user terminal, a location acquisition request may be sent to obtain a current position of the user through the user terminal. Therefore, the server can also detect whether the current position of the user matches the installation location of the beacon. If the current position of the user matches the installation location of the beacon, the server can send a beacon installation reminder corresponding to the beacon to the user terminal, so that the user terminal reminds the user to install the corresponding beacon herein.

By applying the technical solution of the present disclosure, during the process in which the user arrives at the designated destination from the starting location for the second time, the user may be reminded to install the corresponding beacon at the corresponding location. In a case where the configuration of the beacon has been completed by using the foregoing solution, the user only needs to perform a simple installation operation, so that the beacon can provide correct navigation guidance at a correct location, thereby improving an overall efficiency of configuration and installation of the beacon.

In an exemplary embodiment, error correction information for an incorrect direction at the intersection may also be generated based on the navigation map and the intersection description information, and the error correction information is used to configure an error correction beacon installed in the incorrect direction at the intersection. In contrast to the above description of the correct direction at the intersection, a direction that does not conform to the travel route planned by the user may be taken as the incorrect direction at the intersection, and the error correction information may be generated accordingly. With continued reference to FIG. 5, if the travel route planned by the user is S → A1→ A2→ D, for the intersection A2, directions b, c, and d are the incorrect directions at the intersection A2. Therefore, the error correction beacons may be installed within preset areas in the directions b, c, and d, respectively. When the actual user is travelling in the incorrect direction, an error correction reminder is sent, for example, "Make a U-turn ahead and then turn right", to guide the actual user to return to the correct direction at the intersection.

It can be understood that the error correction information can also be generated by the user terminal or the server. A method of generating an installation location of the error correction beacon is also similar to the method of generating the installation location of the above beacon, that is, the beacon in the correct direction at the intersection, which can be generated by the user terminal or the server. Those skilled in the art may set according to requirements, which is not limited by the present disclosure.

By applying the technical solution of the present disclosure, the error correction information for configuring the error correction beacon can be quickly generated, which improves the overall efficiency of configuration and installation of the beacon. Meanwhile, by providing the error correction beacon, the incorrect direction in which the actual user travels can be corrected in time in subsequent use, so that functions of the generated navigation map is more comprehensive and convenient to use.

In an exemplary embodiment, strength for the beacon may also be set. Specifically, the strength for each beacon may be determined according to the location where the beacon is installed, so as to avoid mutual interference among beacons installed close to each other. For example, in a case where the route planned by the user includes a U-shaped intersection, if a beacon A1 and a beacon A2 are installed before a turn and after the turn, respectively, strengths for the two beacons need to be adjusted to an appropriate level, so as to prevent the actual user from receiving the navigation guidance from the beacon A2 at the beacon A1, resulting in confusion in the guidance.

In an exemplary embodiment, a blacklist may also be set for the navigation route. Specifically, the travel route selected by the actual user may be determined from a starting location of the actual user or beacons the actual user has passed. Referring to FIG. 3, if the actual user starts from S1, the route selected by the actual user is S1→ A1→ A2→ D. Since A3 is close to S1, the beacon A3 may be added to the blacklist of this route. At this time, even if the strength for the beacon A3 is high, the actual user may not receive the broadcast signal from the beacon A3 at S1. According to the technical solutions of the present disclosure, the generated navigation map can provide more accurate navigation guidance information, thereby avoiding confusion in the guidance caused by signal interference among beacons.

Based on the method of generating the indoor navigation map provided in the present disclosure, the present disclosure further provides an apparatus for generating an indoor navigation map. Referring to FIG. 7, the apparatus is applied to a user terminal and includes a collection unit 71 and a processing unit 72.

The collection unit 71 is configured for: during a process in which the user terminal travels along one or more routes with a user, collecting, by a sensor equipped in the user terminal, route information of each of the routes.

The processing unit 72 is configured for:
generating the navigation map based on the route information of each of the routes; or
sending the route information of each of the routes to a server for the server to generate the navigation map.

Optionally, the apparatus is further configured for:
in a case where the one or more routes include a first route from a first starting location to a designated destination and a second route from a second starting location to the designated destination, and the first route and the second route share a common point,
after collecting route information of the first route and returning to the common point, collecting, by the sensor, route information from the common point to the second starting location; and
obtaining route information of the second route by processing the route information from the common point to the second starting location in combination with the route information of the first route.

Optionally, the apparatus is further configured for:
acquiring intersection description information for an intersection added by the user, where the intersection description information includes an intersection type of the intersection;
generating navigation guidance information indicating a correct direction at the intersection based on the navigation map and the intersection description information, the correct direction being indicative of a direction conforming to a travel route in the navigation map; or
sending the intersection description information to the server for the server to generate the navigation guidance information indicating the correct direction, and receiving the navigation guidance information returned by the server;
where the navigation guidance information is for configuring a beacon installed in the correct direction.

Optionally, the apparatus is further configured for:
generating a beacon installation location for the beacon based on the navigation map and the intersection description information;
during a process in which the navigation guidance information is written into the beacon and the user travels again from a starting location to the designated destination, detecting a current position of the user; and
sending a beacon installation reminder corresponding to the beacon when the current position of the user matches the beacon installation location.

Optionally, the apparatus is further configured for:
generating error correction information for an incorrect direction at the intersection based on the navigation map and the intersection description information, the incorrect direction being indicative of a direction not conforming to the travel route in the navigation map; or
sending the intersection description information to the server for the server to generate the error correction information for the incorrect direction, and receiving the error correction information returned by the server;
where the error correction information is for configuring an error correction beacon installed in the incorrect direction.

In addition, the present disclosure further provides an apparatus for generating an indoor navigation map, applied to a server. Referring to FIG. 8, the apparatus includes an acquisition unit 81 and a processing unit 82.

The acquisition unit 81 is configured for acquiring, from a user terminal, route information required for generating the navigation map.

The processing unit 82 is configured for generating the navigation map based on the route information.

Optionally, the apparatus is further configured for:
acquiring, from the user terminal, intersection description information for an intersection, the intersection description information being added by a user and including an intersection type of the intersection;
generating navigation guidance information indicating a correct direction at the intersection based on the navigation map and the intersection description information, the correct direction being indicative of a direction conforming to a travel route in the navigation map; and
sending the navigation guidance information to the user terminal;
where the navigation guidance information is for configuring a beacon installed in the correct direction.

Optionally, the apparatus is further configured for:
generating a beacon installation location for the beacon based on the navigation map and the intersection description information;
acquiring a current position of the user after sending the navigation guidance information to the user terminal; and
sending, to the user terminal, a beacon installation reminder corresponding to the beacon when the current position of the user matches the beacon installation location.

For specific implementation processes of functions and roles of the units in the foregoing apparatuses, references can be made to implementation processes of corresponding steps in the foregoing methods, which will not be repeated herein.

For the apparatus embodiment, since the apparatus embodiment basically corresponds to the method embodiment, reference may be made to the partial description of the method embodiment for relevant parts. The apparatus embodiments described above are merely illustrative. The units described as separate components may or may not be physically separate, and the components illustrated as units may or may not be physical units, that is, may be located in one place, or may be distributed on a plurality of network units. Some or all of the modules may be selected according to actual needs to achieve the objectives of the solutions of the present disclosure. Those ordinary skilled in the art can understand and implement without making any creative efforts.

Correspondingly, the present disclosure further provides an electronic device, including at least one memory, at least one processor, and a computer program stored on the memory and executable on the processor, where the processor, when executing the computer program, implements the method of generating the indoor navigation map according to any one of the foregoing embodiments.

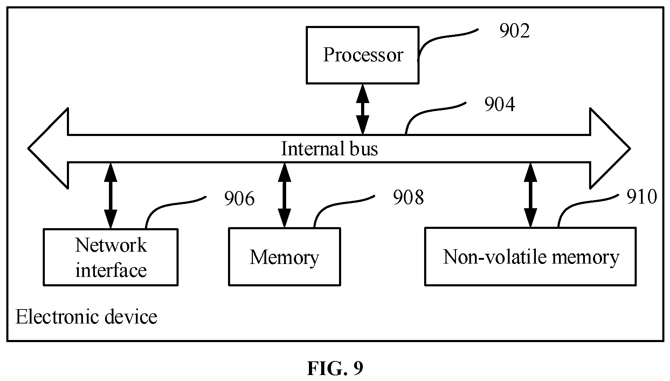

Referring to FIG. 9, at the hardware level, the electronic device includes a processor 902, an internal bus 904, a network interface 906, a memory 908, and a non-volatile memory 910, and may further include other hardware necessary for operation. The processor 902 reads a corresponding computer program from the non-volatile memory 910 into the memory 908 and then runs the computer program, to logically form an apparatus for generating an indoor navigation map. However, in addition to software implementations, the present disclosure does not exclude other implementations, such as logic devices or a combination of software and hardware. In other words, the execution subject for the following processing flow is not limited to various logic units, and may also be hardware or logic devices.

Correspondingly, the present disclosure further provides a computer-readable storage medium having a computer program stored thereon, where the computer program, when executed by at least one processor, implements the method of generating the indoor navigation map according to any one of the above embodiments.

The systems, apparatuses, modules, or units described in the foregoing embodiments may be implemented by computer chips or entities, or may be implemented by products having certain functions. A typical implementation device is a computer, and a specific form of the computer may include a personal computer, a laptop computer, a cellular phone, a camera phone, a smartphone, a personal digital assistant, a media player, a navigation device, an email transceiver device, a game console, a tablet computer, a wearable device, or a combination of any of these devices.

In a typical configuration, the computer includes one or more processors (CPUs), an input/output interface, a network interface, and a memory.

The memory may include a volatile memory, a random access memory (RAM), and/or a non-volatile memory in the form of a computer-readable medium, such as a read-only memory (ROM) or a flash RAM. The memory is an example of a computer-readable medium.

The computer-readable medium includes permanent and non-permanent, and removable and non-removable media that can implement information storage by any method or technology. The information may be a computer-readable instruction, a data structure, a program module, or other data. Examples of a storage medium of a computer include, but are not limited to, a phase-change random access memory (PRAM), a static random access memory (SRAM), a dynamic random access memory (DRAM), another type of random access memory (RAM), a read-only memory (ROM), an electrically erasable programmable read-only memory (EEPROM), a flash memory or another memory technology, a compact disc read-only memory (CD-ROM), a digital versatile disc (DVD), or another optical storage, a magnetic cassette tape, a magnetic disk storage, a quantum memory, a graphene-based storage medium, or another magnetic storage device, or any other non-transmission medium that can be configured to store information accessible by a computing device. As defined herein, the computer-readable medium does not include transitory computer-readable media, such as modulated data signals and carriers.

It should also be noted that the terms "include", "comprise" or any other variants thereof are intended to cover non-exclusive inclusion, so that a process, method, article, or device that includes a series of elements not only includes those elements, but also includes other elements that are not explicitly listed, or further includes elements inherent to such a process, method, article, or device. Without further limitation, an element defined by the phrase "including a..." does not exclude the presence of additional identical elements in the process, method, article, or device that includes the element.

Specific embodiments of the present disclosure have been described above. Other embodiments fall within the scope of the appended claims. In some cases, actions or steps described in the claims may be performed in an order different from that in the embodiments and still achieve desired results. In addition, processes depicted in the accompanying drawings do not necessarily require a particular order, or sequential order illustrated in the drawings, to achieve the desired results. In some implementations, multitasking and parallel processing are also possible or may be advantageous.

Terms used in one or more of the embodiments of the present disclosure are merely intended to describe specific embodiments, but are not intended to limit one or more of the embodiments of the present disclosure. Singular forms "a", "said" and "the" used in the one or more of the embodiments and the appended claims of the present disclosure are intended to include plural forms as well, unless the context clearly indicates otherwise. It should also be understood that the term "and/or" as used herein refers to and encompasses any or all possible combinations of one or more of the associated listed items.

It should be understood that although terms such as first, second, and third, may be used in one or more of the embodiments of the present disclosure to describe various information, the information should not be limited by these terms. These terms are only used to distinguish the same type of information from each other. For example, without departing from the scope of one or more of the embodiments of the present disclosure, first information may also be referred to as second information, and similarly, second information may also be referred to as first information. Depending on the context, the word "if" as used herein may be interpreted as "upon" or "when" or "in response to determining".

The foregoing are merely preferred embodiments of one or more embodiments of the present disclosure, and are not intended to limit the one or more embodiments of the present disclosure. Any modifications, equivalent substitutions, improvements, etc. made within the spirit and principles of the one or more embodiments of the present disclosure shall fall within the scope of protection of the one or more embodiments of the present disclosure.

## Claims

1. A method of generating an indoor navigation map, applied to a user terminal, the method comprising:
during a process in which the user terminal travels along one or more routes with a user, collecting, by a sensor equipped in the user terminal, route information of each of the routes; and
generating the navigation map based on the route information of each of the routes; or
sending the route information of each of the routes to a server for the server to generate the navigation map.

2. The method according to claim 1, wherein during the process in which the user terminal travels along the one or more routes with the user, collecting, by the sensor equipped in the user terminal, the route information of each of the routes, comprises:
in a case where the one or more routes comprise a first route from a first starting location to a designated destination and a second route from a second starting location to the designated destination, and the first route and the second route share a common point, after collecting route information of the first route and returning to the common point, collecting, by the sensor, route information from the common point to the second starting location; and
obtaining route information of the second route by processing the route information from the common point to the second starting location in combination with the route information of the first route.

3. The method according to claim 1, further comprising:
acquiring intersection description information for an intersection added by the user, wherein the intersection description information comprises an intersection type of the intersection; and
generating navigation guidance information indicating a correct direction at the intersection based on the navigation map and the intersection description information, the correct direction being indicative of a direction conforming to a travel route in the navigation map; or
sending the intersection description information to the server for the server to generate the navigation guidance information indicating the correct direction, and receiving the navigation guidance information returned by the server;
wherein the navigation guidance information is for configuring a beacon installed in the correct direction.

4. The method according to claim 3, further comprising:
generating a beacon installation location for the beacon based on the navigation map and the intersection description information;
during a process in which the navigation guidance information is written into the beacon and the user travels again along the one or more routes, detecting a current position of the user; and
sending a beacon installation reminder corresponding to the beacon when the current position of the user matches the beacon installation location.

5. The method according to claim 3, further comprising:
generating error correction information for an incorrect direction at the intersection based on the navigation map and the intersection description information, the incorrect direction being indicative of a direction not conforming to the travel route in the navigation map; or
sending the intersection description information to the server for the server to generate the error correction information for the incorrect direction, and receiving the error correction information returned by the server;
wherein the error correction information is for configuring an error correction beacon installed in the incorrect direction.

6. A method of generating an indoor navigation map, applied to a server, the method comprising:
acquiring, from a user terminal, route information required for generating the navigation map; and
generating the navigation map based on the route information.

7. The method according to claim 6, further comprising:
acquiring, from the user terminal, intersection description information for an intersection, the intersection description information being added by a user and comprising an intersection type of the intersection;
generating navigation guidance information indicating a correct direction at the intersection based on the navigation map and the intersection description information, the correct direction being indicative of a direction conforming to a travel route in the navigation map; and
sending the navigation guidance information to the user terminal;
wherein the navigation guidance information is for configuring a beacon installed in the correct direction.

8. The method according to claim 7, further comprising:
generating a beacon installation location for the beacon based on the navigation map and the intersection description information;
acquiring a current position of the user after sending the navigation guidance information to the user terminal; and
sending, to the user terminal, a beacon installation reminder corresponding to the beacon when the current position of the user matches the beacon installation location.

9. An electronic device, comprising at least one memory, at least one processor, and a computer program stored on the at least one memory and executable on the at least one processor, **characterized in that** the at least one processor, when executing the computer program, implements the method according to any one of claims 1 to 8.

10. A computer-readable storage medium, having a computer program stored thereon, **characterized in that** the computer program, when executed by at least one processor, implements steps of the method according to any one of claims 1 to 8.
